(19)

Europäisches
Patentamt
European
Patent Office
Office européen
des brevets

(11) **EP 2 586 997 A2**

(12) **EUROPEAN PATENT APPLICATION**

(43) Date of publication:
**01.05.2013 Bulletin 2013/18**

(51) Int Cl.:
**F01D 15/10** (2006.01)     **F02C 6/16** (2006.01)

(21) Application number: **12187960.5**

(22) Date of filing: **10.10.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **26.10.2011 GB 201118525**

(71) Applicant: **Alstom Technology Ltd
5400 Baden (CH)**

(72) Inventors:
• **Bove, Roberto**
  **8050 Zürich (CH)**
• **Guidati, Gianfranco**
  **8048 Zürich (CH)**
• **Ferretti, Fabio**
  **8048 Zürich (CH)**
• **Wirsum, Manfred**
  **79618 Rheinfelden (DE)**

(54)     **Compressed air energy storage system and method of operating such a system**

(57)     A compressed air energy storage (CAES) system (20) includes electric motors (6, 7) drivingly connected to compressors (1, 3), a pressure vessel (5), a turbine (9) drivingly connected to an electrical generator (6), and means for controllably diverting a portion ($m_3$) of compressed air away from storage in the pressure vessel during a charging phase of the CAES system and passing it to the turbine (9) to generate electrical power (E2) from the generator (6). The generator is connectable to augment a power supply (E1) to the electric motors (6, 7), thereby to maintain the compressors (1, 3) within a desired range of operational efficiency when the power supply (E1) falls to below a minimum level required to drive the compressors within the desired range of operational efficiency.

FIGURE 1

**EP 2 586 997 A2**

## Description

## Technical Field

The present disclosure relates generally to the field of Compressed Air Energy Storage (CAES) systems. Particularly, though not exclusively, the present disclosure relates to an Adiabatic Compressed Air Energy Storage (ACAES) system able to supplement the electrical power supplied to an electric motor coupled to a compressor forming part of the ACAES system.

## Technical Background

CAES systems can be used to store large amounts of energy and are particularly useful when used as a means to store energy generated during times of low electricity demand, the stored pressurised air then being used to augment energy supply during times of high electricity demand. One particularly relevant instance of such an application arises in the area of renewable energy sources (e.g., wind, wave and solar) electricity generation, where due to their natural variability, it is not possible to control the levels of electricity generation that such systems will yield at a given time. Compared to fossil and nuclear energy sources, this lack of control and predictability puts renewable energy source power generation systems at a disadvantage in production of electricity for the utility grid, which must meet peaks in demand for electricity on a daily cycle.

Generally, CAES systems operate on the principle of using available electrical energy to drive electric motors coupled to compressors to compress a volume of air, which is then stored in a large chamber, such as a suitably modified underground cavern. This is known as the charging phase of operation. At a later time, known as the discharging phase, a portion of this compressed air is released through turbines coupled to generators to generate electricity. Two forms of CAES are currently known: diabatic, and adiabatic. Diabatic CAES systems employ a fuel, such as natural gas, to mix and combust with the compressed air in order to run the turbine at higher temperatures, and therefore higher efficiencies. Adiabatic CAES systems, on the other hand, require either no added fuel, or much reduced amounts of fuel, because they store the heat of compression of the air in a separate thermal energy store. This heat is then later used to raise the temperature of the air before it passes through the turbine, to run the turbine at increased efficiency.

It is a characteristic of compressors that they benefit from stable and optimized operating conditions. Paramount among these conditions in CAES systems is a stable supply of electrical power in order to maintain the compressor train in a stable operating state.

Unfortunately, ACAES systems in their charging phase are handicapped by the limited ability of the compressor train to cope with variable electrical power, such as is available from renewable energy sources, and such a limitation could hinder storage of electricity from such sources, such as wind. Hence, the present disclosure seeks to provide a more flexible CAES system that advantageously can be employed in situations where a stable power supply for charging a CAES system cannot always be guaranteed.

## Summary of the Disclosure

To help address the above problem, we propose operating the compressors always at nominal or near-nominal conditions, even when the available electricity is less than the compressor requirements. To achieve this on such occasions, only part of the compressed air is passed to storage in the cavern, the remaining air being expanded directly to the air turbine to produce the remaining energy required by the compressor. Although overall CAES plant efficiency is reduced, its operational flexibility is increased.

A first aspect of the disclosure provides a CAES system including an electric motor drivingly connected to a compressor, a pressure vessel, a turbine drivingly connected to an electrical generator, and means for controllably diverting a portion of compressed air away from storage in the pressure vessel during a charging phase of the CAES system and passing it to the turbine to generate electrical power from the generator, the generator being connectable to augment a power supply to the electric motor, thereby to maintain the compressor within a desired range of operational efficiency when said power supply falls to below a minimum level required to drive the compressor within said desired range of operational efficiency.

Advantageously, this concept provides for a CAES system that is more flexible, in that it can continue operating even when powered from a fluctuating power source. This means that the CAES system may be employed in situations that might otherwise have been unsuitable for a CAES system, and therefore, this may create a viable energy creation/energy storage integrated system where before this would not have been viable.

Preferably, the CAES system further comprises a controllable pressure reduction valve between the outlet of the compression stage and the turbine. Such a valve can be made to operate in response to a detected fall in said power supply below said minimum level, to supply compressed air at a controlled flow rate to a said turbine.

In a preferred embodiment, the CAES system is an adiabatic compressed air energy storage system, incorporating a thermal energy store located between a final compressor stage and the pressure vessel.

An exemplary CAES system of the above types may comprise first and second compressors in series, the first compressor being a radial compressor and the second compressor being a gas turbine derivative axial compressor. Alternatively, the first compressor may be a gas turbine derivative axial compressor and the second compressor may be a radial compressor.

A second aspect of the disclosure provides a method of operating a CAES system, comprising the steps of:

supplying power to an electric motor from a power supply, the electric motor being drivingly connected to a compressor,

compressing ambient air in the compressor;

diverting a portion of the compressed air away from storage in a pressure vessel during a charging phase of the CAES system;

passing the diverted compressed air to a turbine drivingly connected to an electrical generator; and

using electricity from the generator to augment the power supply to the electric motor, thereby to maintain the compressor within a desired range of operational efficiency when said power supply falls to below a minimum level required to drive the compressor within said desired range of operational efficiency.

Advantageously, the method may further comprise controlling the pressure of said diverted portion of compressed air such that the pressure at an inlet of the turbine is lowered relative to an initial pressure of the compressed air at an outlet of the compressor, and maintained at a stable level.

In a preferred embodiment, the method of operation further comprises the steps of storing thermal energy of the compressed air in a thermal energy store and using the stored thermal energy to heat compressed air during a discharge phase of operation of the CAES system, whereby the system operates as an adiabatic CAES system.

**Brief Description of the Drawings**

Embodiments of the concept disclosed herein will now be described, with reference to the accompanying drawings, in which:

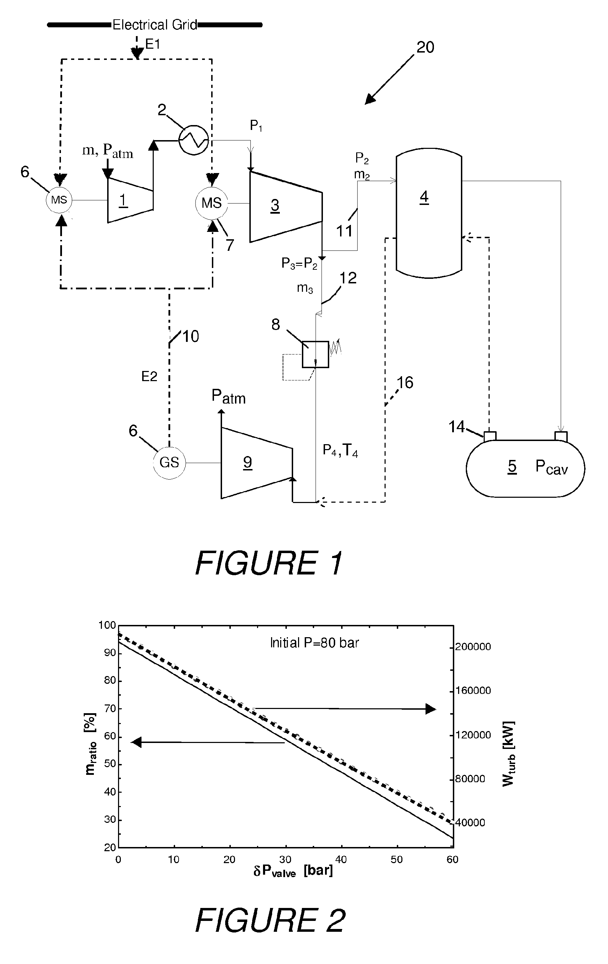

Figure 1 is a schematic representation of an ACAES system in accordance with the appended claims, and Figure 2 is a graph showing mass flow ratio of a turbine and the work it performs in the ACAES system of Figure 1, plotted against the pressure drop across a valve controlling supply of compressed air to the turbine.

**Detailed Description of Preferred Embodiments**

In a preferred embodiment, shown in Figure 1, an ACAES system 20 is operable in charging mode to compress a desired volume of air, and to store that compressed air for a desired length of time, before discharging it through a turbine 9 to recover the energy used in the compression. Hence, the ACAES system 20 comprises a first compressor 1 that is driven by an electric motor 6 to compress ambient air at pressure Patm and mass flow rate m, which is ducted to an intercooler 2. It is envisaged that the first compressor 1 is preferably a radial compressor such as those conventionally used in the oil and gas industries, and will compress the air up to, say, 33 to 35 bar (3300 to 3500 kPa) and approximately 550°C temperature. The intercooler 2 cools the compressed air down to a temperature suitable for passing into a second compressor 3, also driven by an electric motor 7. It is envisaged that the second compressor 3 is preferably a gas turbine derivative axial compressor that is operable to compress the air up to, e.g., 60 to 80 bar. The electric motors 6 and 7 are supplied with electricity E1 from the utility grid.

The compressed air from the second compressor 3 is then divided two ways into first and second ducts 11 and 12, by means of a mass-flow splitter (not shown). The splitter may simply be a three-way manifold connecting the output of compressor 3 to ducts 11 and 12.

The first duct 11 passes the compressed air to a thermal energy storage unit (TES) 4. As the compressed air in the first duct passes through the TES 4, its thermal energy is transferred to a heat storage material contained in the TES 4, such as stone or concrete, or a liquid such as molten salt. The intercooler 2 may advantageously be linked to the TES 4 through a heat pump, such that thermal energy extracted from the air heated by compression in the first compressor 1 is transferred to the TES 4.

After passing through the TES 4, the now cooled compressed air flows to a large pressure-vessel, such as a suitably modified underground cavern 5, where it is stored until needed.

The correct ratio of flow in duct 11 to duct 12 is achieved by regulation of pressure $P_4$ of the mass flow rate $m_3$ of the air passing to turbine 9 at a temperature $T_4$, using a variable pressure reducing valve 8. Valve 8 supplies air at a constant pressure $P_4$ to turbine 9, pressure $P_4$ being lower than pressure $P_3$ in the second duct 12. In Figure 2, the solid line shows the mass flow ratio through the turbine 9 (i.e., the ratio of mass flow rate $m_3$ through the turbine 9 to the total mass flow rate m out of compressor 3), expressed as a percentage, plotted against the pressure drop $\delta P_{valve}$ (in bars) across the valve 8. Stodola's equation,

$$\frac{m_3 \sqrt{T_4}}{P_4} = K \sqrt{1 - \left(\frac{P_{atm}}{P_4}\right)^2}$$

defines the relationship between mass flow and inlet conditions of the air turbine 9. Additionally, the dashed line in Figure 2 illustrates how the work $W_{turb}$ (in kW) done in the turbine during expansion of the compressed air varies with the pressure drop $\delta P_{valve}$.

Turbine 9 drives an electrical generator 6, which is connectable to the motors 6 and 7 through circuit breaker 10. The electricity E2 thus generated is available to augment the electrical power supply E1 from the grid. In this way, if the power E1 available from the grid is unstable, insufficient, or is not available at an acceptable cost, augmentation by electrical power E2 can be used to operate the first 1 and second 3 compressors at as near as possible to their peak efficiency, albeit at the cost of a reduction in overall system efficiency. As a result, the ACAES system 20 can be used in situations where previously it would have been difficult or uneconomic to operate. For example, say that the compressors require 300 MW, all the time, in order to "pump" 400 kg/s of air into the cavern, but at a certain point in time the grid can provide only 250 MW. In our concept, this problem is solved by diverting a certain amount of air away from the TES 4 and the cavern 5, and using it in the turbine 9 to produce the extra 50 MW required by the compressors. The result is that the compressors do not see any change in their electricity supply, but this is done at the expenses of the cavern, which receives less air.

Thus, an ACAES system 20 according to preferred embodiments increases the flexibility of, say, a solar, or a wind powered electricity generation system by allowing for capture and storage of electrical power generated thereby, even in conditions that would otherwise have prevented such capture and storage. Thus, even though there is a loss of total system efficiency, the increase in flexibility may very well more than make up for such a loss, be allowing capture of energy that, in the absence of a running ACAES system, would otherwise be lost or wasted. Through providing a mechanism by which the efficiency may be traded off against flexibility, the system 20 becomes more versatile, and may be employed in a wider range of scenarios that otherwise would be possible. There are wider benefits in that the provision of such a system 20 might be a key factor in whether or not a renewable energy generation plant (such as a wind farm) might be viable in a certain location. Conventionally, the reduction in overall system efficiency that employment of this concept entails would be avoided, but the fact that the system 20 can remain operational at all can be a more important factor.

The above description with reference to Figure 1 has dealt only with the operation of the ACAES system 20 during its charging phase. When it is desired that the ACAES system 20 be used to generate power from the stored thermal energy in the TES 4 and the stored potential energy in the cavern 5, an outlet 14 from the cavern 5 is opened and the pressure therein causes air to be expelled through a duct, shown in dashed lines, leading to the TES 4. As the air flows to and through the TES 4 it recovers thermal energy therefrom and rises in temperature. Having passed through the TES 4, the air is preferably at a temperature sufficiently high to operate a turbine (for example, 530°C) with as close to optimal efficiency as possible. The heated compressed air is then ducted to the turbine 9 which it drives the electrical generator 6. Preferably, the compressed air duct 16 flowing from the TES 4 to the turbine 9 merges with the second duct 12 at or near the turbine inlet and an open/close valve (not shown) would be provided such that one of these two ducts 12 and 16 is closed at any given time, thereby to prevent any loss of pressure before the mass-flow reaches the turbine 9.

It is envisaged that an ACAES system according to preferred embodiments may differ from the above preferred embodiment without falling outside the scope of the disclosure as defined in the attached claims. For example, it is envisaged that the ACAES system could comprise only a single stage of compression and that the compressed air therefrom would be immediately split between the TES and the PRV. Alternatively, additional compression stages could be added. The nature of the compressors themselves may be altered: the first compressor may be a gas turbine derivative axial compressor and the second a radial turbine, or both compressors (or all of them if more are added) may be of the same type. The location of the TES may be altered such that it is located between the two stages of compression.

The above description has focussed on embodiments of the present concept in adiabatic CAES systems, but this does not preclude its applicability to diabatic CAES systems.

The above embodiments have been described above purely by way of example, and modifications can be made within the scope of the appended claims. Thus, the breadth and scope of the claims should not be limited to the above-described exemplary embodiments. Each feature disclosed in the specification, including the claims and drawings, may be replaced by alternative features serving the same, equivalent or similar purposes, unless expressly stated otherwise.

Unless the context clearly requires otherwise, throughout the description and the claims, the words "comprise", "comprising", and the like, are to be construed in an inclusive as opposed to an exclusive or exhaustive sense; that is to say, in the sense of "including, but not limited to".

## Claims

1. A compressed air energy storage (CAES) system, including an electric motor drivingly connected to a compressor, a pressure vessel, a turbine drivingly connected to an electrical generator, and means for controllably diverting a portion of compressed air away from storage in the pressure vessel during a charging phase of the CAES system and passing it to the turbine to generate electrical power from the generator, the generator being connectable to augment a power supply to the electric motor, thereby to maintain the compressor within a desired range of operational efficiency when said power supply falls to below a minimum level required to drive the compressor within said desired range of operational efficiency.

2. The CAES system of claim 1, further comprising a controllable pressure reduction valve between the outlet of the compression stage and the turbine.

3. The CAES system of claim 2, wherein the pressure reduction valve is operable, in response to a detected fall in said power supply below said minimum level, to supply compressed air at a controlled flow rate to a said turbine.

4. The CAES system of any preceding claim, the system being an adiabatic compressed air energy storage system, incorporating a thermal energy store located between a final compressor stage and the pressure vessel.

5. The CAES system of any preceding claim, comprising first and second compressors in series, the first compressor being a radial compressor and the second compressor being a gas turbine derivative axial compressor.

6. The CAES system of any one of claims 1 to 4, comprising first and second compressors in series, the first compressor being a gas turbine derivative axial compressor and the second compressor being a radial compressor.

7. A method of operating a CAES system, comprising the steps of:

supplying power to an electric motor from a power supply, the electric motor being drivingly connected to a compressor,
compressing ambient air in the compressor;
diverting a portion of the compressed air away from storage in a pressure vessel during a charging phase of the CAES system;
passing the diverted compressed air to a turbine drivingly connected to an electrical generator; and
using electricity from the generator to augment the power supply to the electric motor, thereby to maintain the compressor within a desired range of operational efficiency when said power supply falls to below a minimum level required to drive the compressor within said desired range of operational efficiency.

8. The method of claim 7, further comprising the step of controlling the pressure of said diverted portion of compressed air such that the pressure at an inlet of the turbine is lowered relative to an initial pressure of the compressed air at an outlet of the compressor, and maintained at a stable level.

9. The method of claim 7 or claim 8, further comprising the steps of storing thermal energy of the compressed air in a thermal energy store and using the stored thermal energy to heat compressed air during a discharge phase of operation of the CAES system.

10. An ACAES system as hereinbefore described with reference to the accompanying Figures.

11. A method of maintaining a compression stage of an ACAES system within a desired range of operational efficiency despite fluctuations in a power supply to the compression stage, as hereinbefore described with reference to the accompanying Figures.

FIGURE 1

FIGURE 2